# EUROPÄISCHE PATENTSCHRIFT

(11) **EP 3 541 868 B1**
(45) Veröffentlichungstag und Bekanntmachung des Hinweises auf die Patenterteilung: **15.04.2020**
(21) Anmeldenummer: 16798482.2
(22) Anmeldetag: 18.11.2016
(51) Int. Cl.: C08K 3/00, C08L 83/04, C08J 3/22

(54) **FARBMITTEL ENTHALTENDE ZUSAMMENSETZUNG**
COMPOSITION CONTAINING DYE
COMPOSITION CONTENANT DES COLORANTS

(43) Veröffentlichungstag der Anmeldung: 25.09.2019
(73) Patentinhaber: Wacker Chemie AG, 81737 München (DE)
(72) Erfinder: SCHÄFER, Oliver, 84489 Burghausen (DE); RANDEL, Peter, 87452 Altusried (DE)
(74) Vertreter: Budczinski, Angelika
(86) Internationale Anmeldenummer: PCT/EP2016/078159
(87) Internationale Veröffentlichungsnummer: WO 2018/091104

(56) Entgegenhaltungen:
- WO-A1-2015/170536
- US-A1- 2013 313 493

## Beschreibung

Die vorliegende Erfindung betrifft Farbmittel enthaltende Zusammensetzungen, ein Verfahren zu deren Herstellung sowie deren Verwendung bei der Einfärbung von Polymerwerkstoffen.

Es ist bekannt, Polyester- und Polyamidfasern entweder durch Badfärbung (HT-Verfahren, Thermosol-Verfahren, Reaktivfärbung) oder durch Spinnfärbung (Massefärbung) zu färben, das heißt einen Wirkstoff, beispielsweise in Form eines Farbpigments in die Fasern einzuarbeiten. Das Prinzip der Badfärbung besteht darin, dass man den Farbstoff mehr oder weniger in die Faser eindringen lässt. Unter geeigneten Bedingungen (Dauer der Behandlung, Temperatur) wird die Faser vom Farbstoff oder einem sonstigen Wirkstoff, beispielsweise einem Fungizid, durchdrungen. Bei der Auswahl der Farbtöne ist man hierbei nicht beschränkt. Bei technischen Fasern allerdings, im Gegensatz zu Textilfasern, reichen die bisher erzielten Farbechtheiten im Allgemeinen nicht aus. Hier bevorzugt man deshalb die Massefärbung, bei der Masterbatches auf Basis des der Faser zugrunde liegenden Polymerisats als Farbstoffkonzentrate eingesetzt werden. Aufgrund der hohen Hitzebelastung bei der Herstellung und Verwendung der Masterbatches können jedoch nur thermostabile Farbstoffe eingesetzt werden.

Farb-Masterbatches werden derzeit typischerweise aus Kunststoffgranulaten und Farbmitteln hergestellt. Die Colorierung erfolgt durch Misch- und Schmelzprozess von Farbmittel und Kunststoffgranulat unter Beimischung geringer Mengen von Additiven im Doppelschneckenextruder. Praktiziert wird sowohl die einstufige als auch die zweistufige Masterbatchherstellung. Während bei der einstufigen Fertigung sofort alle Rohstoffkomponenten vorgelegt und extrudiert werden, führt die zweistufige Fertigung über sog. "Monokonzentrate", die im zweiten Schritt nochmals gemischt, und gegebenenfalls mit Additiven versehen, extrudiert werden. Die Homogenität des Farbtons im Kunststoff hängt davon ab, welches Fließverhalten in der Schmelze erreicht wird bzw. wie gut sich der Masterbatch in der Matrix verteilt. Für jede Kunststoffklasse gibt es daher spezielle Masterbatchtypen.

Eine prinzipielle Problematik der Masterbatchherstellung ist, dass Pigmente, deren Primärpartikel im Größenbereich von wenigen Nanometern bis einigen Mikrometern liegen, in die makromolekularen Werkstoffe im Schmelzemischverfahren eingearbeitet werden müssen. Das Aufschließen der Pigmentaggregate und -agglomerate und das homogene Verteilen der Pigmente in der z.T. sehr hochviskosen Kunststoffschmelze können aber durchaus problematisch sein. Hinzu kommt, dass das Mischverhalten von Farbmitteln in den jeweiligen Kunststoffen - vor allem bei höheren Konzentrationen an Pigmenten bzw. Farbstoffen - nicht vorhersehbar ist, so dass vor allem die Herstellung von Masterbatches oftmals Schwierigkeiten bereitet, da die in einen jeweiligen Kunststoff einzuarbeitenden Farbmittel, also z.B. Pigmente oder Farbstoffe, oftmals verklumpen oder agglomerieren, so dass starke Inhomogenitäten auftreten. Dies führt zu nachteiligen Eigenschaften des Masterbatches, z.B. was rheologische oder mechanische Eigenschaften anbelangt.

Darüber hinaus kann es bei einigen Pigmenten, v.a. beim häufig verwendeten Farbruß, dazu kommen, dass der Ruß bei guter Verteilung im Masterbatch diesen rheologisch stark beeinflusst, d.h. die Schmelzviskosität dieses Masterbatches stark erhöht, so dass die anschließende Verteilung in einem niederviskosen Grundmaterial stark erschwert, was wiederum zur Inhomogenität führen kann.

Alternative zu Farbmasterbatchen auf Basis von Kunststoffgranulaten sind Pigment bzw. Farbstoffpräparationen in flüssigen Trägersubstanzen, in denen die Einarbeitung der verwendeten Pigmente durch Verwendung geeigneter Apparaturen wie z.B. Dissolvern leicht möglich ist. Diese sind z.B. in der WO-A 10117268 und der EP-A 2607426 beschrieben. Nachteilig an den hier beschriebenen Mischung ist u.a., dass die Trägersubstanzen aufgrund ihrer Mischbarkeit die mechanischen Eigenschaften des eingefärbten Kunststoffes beeinträchtigen können sowie die Tatsache, dass hier nur relativ niedermolekulare Produkte Verwendung finden können, da nur diese eine ausreichend geringe Viskosität aufweisen, um einen ausreichend guten Einmischprozess mit den Pigmenten bzw. Farbstoffen gewährleisten zu können sowie im Anschluss als verarbeitete Pigmentformulierung noch technisch verarbeitbar zu sein. Diese oligomeren Trägersubstanzen haben aber bei den Verarbeitungstemperaturen v.a. von technischen Kunststoffen wie z.B. PET oder Polyamid von über 250°C schon merklich hohe Dampfdrücke, so dass es bei Extrusionsprozessen u.a. zum Abdampfen dieser Trägersubstanzen kommen kann, was nicht erwünscht ist.

US 2013/313493 offenbart eine flammhemmende Zusammensetzung enthaltend u.A. ein Polysiloxan-Polycarbonat-Copolymer und ein Silikonöl. Der Zusatz eines Farbmittels, z.B. Titandioxid oder Russ, wird auch beschrieben.

Gegenstand der Erfindung sind Farbmittel enthaltende Zusammensetzungen enthaltend
(A) mindestens ein Farbmittel,
(B) mindestens ein Organopolysiloxan enthaltend Einheiten der allgemeinen Formel

   Rₐ(R¹O)_{b}SiO_{[4-(a+b)]/2} (I),

   wobei
   R gleich oder verschieden sein kann und einen einwertigen, SiC-gebundenen, gegebenenfalls substituierten Kohlenwasserstoffrest bedeutet, der durch Heteroatome unterbrochen sein kann,
   R¹ gleich oder verschieden sein kann und Wasserstoffatom oder einen einwertigen, gegebenenfalls substituierten Kohlenwasserstoffrest darstellt, der durch Heteroatome unterbrochen sein kann,
   a 0, 1, 2 oder 3 ist und
   b 0, 1, 2 oder 3 ist,
   mit der Maßgabe, dass die Summe a+b≤3 ist und in mehr als 80 % aller Einheiten der Formel (I) a gleich 2 ist, sowie (C) mindestens ein Siloxan-Organo-Copolymer.

Beispiele für Kohlenwasserstoffreste R sind Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste wie der n-Hexylrest; Heptylreste wie der n-Heptylrest; Octylreste wie der n-Octylrest und iso-Octylreste wie der 2,2,4-Trimethylpentylrest; Nonylreste wie der n-Nonylrest; Decylreste wie der n-Decylrest; Dodecylreste wie der n-Dodecylrest; Octadecylreste wie der n-Octadecylrest; Cycloalkylreste wie der Cyclopentyl-, Cyclohexyl-, Cycloheptylrest und Methylcyclohexylreste; Alkenylreste wie der Vinyl-, 1-Propenyl- und der 2-Propenylrest; Arylreste wie der Phenyl-, Naphthyl-, Anthryl- und Phenanthrylrest; Alkarylreste wie o-, m-, p-Tolylreste; Xylylreste und Ethylphenylreste; oder Aralkylreste wie der Benzylrest oder der α- und der β-Phenylethylrest.

Beispiele für substituierte Kohlenwasserstoffreste R sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenylrest; Mercaptoalkylreste, wie der 2-Mercaptoethyl- und 3-Mercaptopropylrest; Cyanoalkylreste, wie der 2- Cyanoethyl- und 3-Cyanopropylrest; Aminoalkylreste, wie der 3-Aminopropylrest; Acyloxyalkylreste, wie der 3-Acryloxypropyl- und 3-Methacryloxypropylrest; Hydroxyalkylreste, wie der Hydroxypropylrest; oder Epoxidreste wie der Glycidyloxypropylrest.

Vorzugsweise bedeutet Rest R einen einwertigen, gegebenenfalls mit Halogenatomen, Mercaptogruppen, Cyanogruppen, Aminogruppen, Acyloxygruppen, Hydroxygruppen oder Glycidyloxygruppen substituierten Kohlenwasserstoffrest mit 1 bis 20 Kohlenstoffatomen, besonders bevorzugt einen gegebenenfalls mit Halogenatomen, Mercaptogruppen, Cyanogruppen, Aminogruppen, Acyloxygruppen, Hydroxygruppen oder Glycidyloxygruppen substituierten Kohlenwasserstoffrest mit 1 bis 6 Kohlenstoffatomen, insbesondere um den Methyl-, Ethyl-, Propyl-, Vinyl-, Phenyl-, 3-Methacryloxypropyl-, 1-Methacryloxymethyl-, 1-Acryloxymethyl- oder 3-Mercaptopropylrest, ganz besonders bevorzugt um den Methylrest.

Beispiele für Rest R¹ sind die für den Rest R angegebenen Reste.

Bevorzugt handelt es sich bei Rest R¹ um Kohlenwasserstoffreste mit 1 bis 18 Kohlenstoffatomen, besonders bevorzugt um Kohlenwasserstoffreste mit 1 bis 8 Kohlenstoffatomen, insbesondere um Methyl- oder Ethylreste.

Bevorzugt handelte sich bei a um 2 oder 3.

Bevorzugt handelte sich bei b um 0 oder 1.

Bei der erfindungsgemäß eingesetzten Komponente (B) handelt es sich bevorzugt um Organopolysiloxane bestehend aus Einheiten der Formel (I).

Besonders bevorzugt handelt es sich bei der erfindungsgemäß eingesetzten Komponente (B) um bei 20 °C und 1000 hPa flüssige Organopolysiloxane.

Bevorzugt handelt es sich bei der erfindungsgemäß eingesetzten Komponente (B) um im Wesentlichen lineare Organopolysiloxane, besonders bevorzugt um Dialkylpolysiloxane mit einem Anteil an Verzweigungen, d.h. Einheiten der Formel (I) mit a+b kleiner 2, von maximal 0,1 mol-%, insbesondere um Trialkylsilyl-terminierte Dialkylpolysiloxane mit einem Anteil an Verzweigungen, d.h. Einheiten der Formel (I) mit a+b kleiner 2, von maximal 0,1 mol-%.

Beispiele für die erfindungsgemäß eingesetzte Komponente (B) sind

Me₃SiO_{1/2}(Me₂SiO_{2/2})₃₀₋₆₀₀SiMe₃,

HOMe₂SiO_{1/2}(Me₂SiO_{2/2})₃₀₋₆₀₀SiMe₂OH,

Me₃SiO_{1/2}(Me₂SiO_{2/2})₃₀₋₆₀₀(C₆H₅MeSiO_{1/2})₁₋₁₀₀SiMe₃,

Me₃SiO_{1/2}(Me₂SiO_{2/2})₃₀₋₆₀₀((C₆H₅)₂SiO_{2/2})₁₋₁₀₀Sime_{3;}

HOMe₂SiO_{1/2}(Me₂SiO_{2/2})₃₀₋₆₀₀(C₆H₅MeSiO_{2/2})₁₋₁₀₀SiMe₂OH

und

HOMe₂SiO_{1/2}(Me₂SiO_{2/2})₃₀₋₆₀₀((C₆H₅)₂SiO_{2/2})₁₋₁₀₀SiMe₂OH.

Die erfindungsgemäß eingesetzten Organopolysiloxane (B) besitzen bei 20°C vorzugsweise eine Viskosität von 5 bis 200000 mPa·s, bevorzugt 50 bis 100000 mPa·s, besonders bevorzugt 100 bis 10000 mPa·s, gemessen nach der DIN 53019.

Komponente (B) sind handelsübliche Produkte bzw. können nach in der Siliziumchemie gängigen Verfahren hergestellt werden.

Bevorzugt werden Siloxane (B) in Mengen von 5 bis 90 Gew.-%, besonders bevorzugt von 30 bis 80 Gew.-%, jeweils bezogen auf das Gesamtgewicht der Komponenten (A), (B) und (C), eingesetzt.

Bei den erfindungsgemäß eingesetzten Farbmitteln (A) kann es sich um alle bisher bekannten Farbmittel handeln.

Unter Farbmittel sollen alle Substanzen mit optischer Wirkung verstanden werden. Beispiele für Farbmittel (A) sind die in DIN ISO 18451 genannten Beispiele.

Bevorzugt handelt es sich bei den Farbmitteln (A) um anorganische oder organische Farbmittel oder deren Vorstufen, besonders bevorzugt um solche ausgewählt aus anorganischen Farbstoffen, organischen Farbstoffen, anorganischen Pigmenten und organischen Pigmenten sowie deren Vorstufen.

Beispiele für Pigmente (A) sind anorganische Pigmente wie solche der Gruppe der Oxide, z.B. Eisenoxid (braun, rot, schwarz), Chromoxid (grün), Titandioxid, oder Kohlenstoff, z.B. Rußschwarz, oder Chromate, z.B. Bleichromat-gelb, Molybdatorange, oder Komplexe anorganischer Buntpigmente, z.B. Chromtitangelb, Chromeisenbraun, Kobaltblau, Nickeltitangelb, Zinkeisenbraun, Wismutvanadatgelb, oder Sulfide, z.B. Cadmiumsulfid (gelb, orange, rot), Cersulfid (gelb, orange, rot), Ultramarin (violett, blau) und Zinksulfid (weiß), organische Pigmente, wie Azopigmente, z.B. verlackte Azopigmente (gelb, rot), Disazopigmente (gelb, orange, rot), Disazokondensationspigmente (gelb, rot), Benzimidazolpigmente (gelb, orange), Metallkomplexpigmente (gelb), Isoindolinpigmente (gelb), Isoindolinonpigmente (gelb), oder auch polyzyklische Pigmente, z.B. Chinacridon (vi olett, blau), Chinophthalon (gelb), Diketo-Pyrrolo-Pyrrol (orange, rot, violett), Dioxazinpigmente (violett), Indanthron (blau), Perylen (rot, violet) und Phthalocyanin (blau, grün).

Beispiele für Farbstoffe (A) sind Anthrachinon, Chinophthalon, Pyrazolon, Perinon und Monoazofarbstoffe, als auch fluoreszierende Farbstoffe, z.B. Perylen, Naphthalimid, Cuminderivate, Thioindigo oder Thioxanthen-Benzanthron.

Bevorzugt handelt es sich bei den Farbmitteln (A) um anorganische oder organische Pigmente, besonders bevorzugt um Kohlenstoff basierte Pigmente und Metalloxid-Pigmente, insbesondere um Ruß oder Titandioxid.

Die BET-Oberflache der verwendeten Farbmittel (A), bestimmt nach ISO 4652, liegt bevorzugt zwischen 10 und 2000 m²/g, ganz besonders bevorzugt zwischen 40 und 1100 m²/g.

Der Siebrückstand der verwendeten Farbmittel (A) beträgt - gemessen in Anlehnung an die DIN EN ISO 787-7:2009 - bevorzugt weniger als 10 % bei Verwendung eine 45 µm Siebes, ganz besonders bevorzugt weniger als 1 %.

Die Primärpartikelgröße der erfindungsgemäß eingesetzten Farbmittel (A) beträgt bevorzugt weniger als 1 µm, besonders bevorzugt weniger als 0,1 µm.

Bevorzugt werden Farbmittel (A) in Mengen von 0,5 bis 85 Gew.-%, besonders bevorzugt in Mengen von 1 bis 80 Gew.-%, insbesondere in Mengen von 10 bis 50 Gew.-%, jeweils bezogen auf das Gesamtgewicht der Komponenten (A), (B) und (C), eingesetzt.

Bevorzugt handelt es sich bei den organischen Segmenten in den Copolymeren (C) um (Co)polymere des (Methyl)methacrylates, der Polyalkylenoxide oder um Polyester-Segmente, besonders bevorzugt handelt es sich bei den organischen Segmenten in den Copolymeren (C) um aliphatische Polyester-Segmente.

In den erfindungsgemäß eingesetzten Copolymeren (C) können die Siloxansegmente und die Organosegmente beliebig, z.B. statistisch, verteilt sein. Bevorzugt handelt es sich bei Komponente (C) um Block - oder Kammpolymere, besonders bevorzugt um Blockcopolymere.

Bevorzugt haben die Siloxansegmente in Komponente (C) ein Molekulargewicht Mn von vorzugsweise 1000 bis 10000 g/mol.

Das zahlenmittlere Molekulargewicht Mn wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Bevorzugt beträgt der Anteil des Siloxansegments im erfindungsgemäß eingesetzten Siloxan-Organo-Copolymer (C) mindestens 25 Gew.-% und der Anteil des Organosegmentes an der Komponente (C) bevorzugt maximal 75 Gew.-%, ganz besonders bevorzugt maximal 60 Gew.-%.

Besonders bevorzugt handelt es sich bei Komponente (C) um ein Polysiloxan-Polycaprolacton Blockcopolymer enthaltend Siloxansegmente mit jeweils einem Molekulargewicht Mn von 1000 bis 10 000 g/mol, bevorzugt 2000 bis 4000 g/mol.

Bevorzugt besitzt Komponente (C) eine Viskosität von unter 20 Pa's im Temperaturbereich von 20 bis 100 °C.

Bevorzugt handelt es sich bei Komponente (C) um Siloxan-Organo-Copolymere enthaltend Einheiten der allgemeinen Formel

R²_{c}(R³O)_{d}SiO_{[4-(c+d)]/2} (II),

worin
R² gleich oder verschieden sein kann und einen einwertigen, SiC-gebundenen, gegebenenfalls substituierten Kohlenwasserstoffrest bedeutet, der durch Heteroatome unterbrochen sein kann,
R³ gleich oder verschieden sein kann und Wasserstoffatom oder einen einwertigen, gegebenenfalls substituierten Kohlenwasserstoffrest darstellt, der durch Heteroatome unterbrochen sein kann,
c 0, 1, 2 oder 3 ist und
d 0, 1, 2 oder 3 ist,
mit der Maßgabe, dass die Summe c+d≤3 ist und in mehr als 80 % aller Einheiten der Formel (II) c gleich 2 ist,
sowie Einheiten der allgemeinen Formel

R²_{f}LₑSiO_{[4-(f+e)]/2} (III),

worin
e 1, 2 oder 3 ist,
f 0, 1 oder 2 ist
mit der Maßgabe, dass die Summe e+f≤3 ist,
L einen Rest darstellt ausgewählt aus Resten der
Formel (IV) R⁴-[O-(CH₂)₅-CO-]ᵥ-[O-(CR⁵₂)ₙ-CO-]ᵤ-X-

   und Resten der

   Formel (V) R⁴-[O-(CH₂)₂]ᵥ-[O-(CR⁵₂)ₘ]ᵤ-X-,
X jeweils gleich oder verschieden sein kann und -O-, -NR⁶-R⁷- oder -O-R⁷- bedeutet,
R⁶ gleich oder verschieden sein kann und Wasserstoffatom oder monovalente, substituierte oder unsubstituierte Kohlenwasserstoffreste bedeutet,
R⁷ gleich oder verschieden sein kann und bivalente, substituierte oder unsubstituierte Kohlenwasserstoffreste mit 1 bis 40 Kohlenstoffatomen bedeutet, die durch Sauerstoffatome unterbrochen sein können,
R⁴ gleich oder verschieden sein kann und Wasserstoffatom oder monovalente, substituierte oder unsubstituierte Kohlenwasserstoffreste bedeutet,
R⁵ gleich oder verschieden sein kann und Wasserstoffatom oder monovalente, substituierte oder unsubstituierte Kohlenwasserstoffreste bedeutet,
n eine ganze Zahl von 3 bis 10, bevorzugt 5, ist
m eine ganze Zahl von 2 bis 6, bevorzugt 2, ist
u 0 oder eine ganze Zahl von mindestens 1, bevorzugt mindestens 2 ist, und
v 0 oder eine ganze Zahl von mindestens 1, bevorzugt mindestens 2, ist, mit der Maßgabe, dass sowohl in Formel (IV) als auch in Formel (V) die Summe u+v eine ganze Zahl von mindestens 2 bedeutet.

Beispiele und bevorzugte Beispiele für Rest R² sind die für Rest R oben genannten Beispiele und bevorzugte Bereiche.

Beispiele und bevorzugte Beispiele für Rest R³ sind die für Rest R¹ oben genannten Beispiele und bevorzugte Bereiche.

Bevorzugt ist c eine Zahl von 2 oder 3, ganz besonders bevorzugt 2.

Bevorzugt ist d eine Zahl von 0 oder 1, ganz besonders bevorzugt 0.

Bevorzugt ist e eine Zahl von 1 oder 2, ganz besonders bevorzugt 1.

Bevorzugt ist f eine Zahl von 1 oder 2, ganz besonders bevorzugt 2.

Beispiele für Rest R⁴, R⁵ und R⁶ sind unabhängig voneinander die für Rest R oben genannten Beispiele oder Wasserstoffatom.

Bevorzugt handelt es sich bei Rest R⁴ um Wasserstoffatom oder einwertige Kohlenwasserstoffreste mit 1 bis 12 Kohlenstoffatomen, besonders bevorzugt um Wasserstoffatom oder einwertige Kohlenwasserstoffreste mit 1 bis 4 Kohlenstoffatomen, insbesondere um Wasserstoffatom, Methyl- oder Ethylreste.

Bevorzugt handelt es sich bei Rest R⁵ um Wasserstoffatom oder einwertige Kohlenwasserstoffreste mit 1 bis 12 Kohlenstoffatomen, besonders bevorzugt um Wasserstoffatom oder einwertige Kohlenwasserstoffreste mit 1 bis 4 Kohlenstoffatomen, insbesondere um Wasserstoffatom, Methyl- oder Ethylreste.

Bevorzugt handelt es sich bei Rest R⁶ um Wasserstoffatom oder einwertige Kohlenwasserstoffreste mit 1 bis 12 Kohlenstoffatomen, besonders bevorzugt um Wasserstoffatom oder einwertige Kohlenwasserstoffreste mit 1 bis 4 Kohlenstoffatomen, insbesondere um Wasserstoffatom, Methyl- oder Ethylreste.

Beispiele für Rest R⁷ sind Methylen-, Propylen-, Hexylen- sowie -C₂H₄-O-C₃H₆- Reste.

Bevorzugt handelt es sich bei Rest R⁷ um zweiwertige Kohlenwasserstoffreste mit 1 bis 12 Kohlenstoffatomen, besonders bevorzugt um zweiwertige Kohlenwasserstoffreste mit 1 bis 6 Kohlenstoffatomen, insbesondere um zweiwertige Kohlenwasserstoffreste mit 3 Kohlenstoffatomen.

Beispiele für Rest L der Formel (IV) sind aliphatische Polyesterpolymere, wobei Copolymere auf Polycaprolacton-Bäsis bevorzugt und Homopolymere des Polycaprolactones besonders bevorzugt sind.

Beispiele für Rest L der Formel (V) sind Polyethercopolymere und Polyetherhomopolymere, wobei Polyethercopolymere bevorzugt und Polyethylenoxid-co-propylenoxid-Polymere besonders bevorzugt sind.

Bevorzugt handelt es sich bei Rest L um Polycaprolactone oder Polyethylenoxid-co-propylenoxid-Polymere, besonders bevorzugt um Polycaprolactone oder Polyethylenoxid-co-propylenoxid-Polymere mit einem Molekulargewicht von 500 bis 2500 g/mol, insbesondere um Polycaprolactone mit einem Molekulargewicht von 1000 bis 2100 g/mol.

Die erfindungsgemäß eingesetzten Siloxan-Organo-Copolymere (C) sind bereits bekannt und können nach an sich bekannten Verfahren hergestellt werden, wie z.B. durch ringöffnende Polymerisation von cyclischer Estern mittels reaktiver Siloxane. Entsprechende Produkte sind im Handel erhältlich, wie etwa unter dem Produktnamen "WAX OH 350 D" bei der Wacker Chemie AG sowie unter dem Produktnamen "NIAX L626 oder NIAX L 627" bei der Momentive Performance Materials, Waterford, USA.

Bevorzugt werden Copolymere (C) in Mengen von 0,1 bis 50 Gew.-%, besonders bevorzugt von 5 bis 40 Gew.-%, jeweils bezogen auf das Gesamtgewicht der Komponenten (A), (B) und (C) eingesetzt.

Bevorzugt ist in der erfindungsgemäßen Zusammensetzung die eingesetzte Menge an Komponente (C) kleiner als die eingesetzte Menge an Komponente (B).

Zusätzlich zu den Komponenten (A), (B) und (C) können die erfindungsgemäßen Zusammensetzungen weitere Stoffe enthalten, die unterschiedlich sind zu den Komponenten (A), (B) und (C), wie z.B. Nanofüllstoffe (D), Stabilisatoren (E), Antistatika (F), Flammschutzmittel (G), Haftvermittler (H), Nukleierungsmittel (I), Treibmittel (J) und antibakterielle Mittel (K).

Vorzugsweise beträgt die Gesamtmenge an gegebenenfalls eingesetzten weiteren Stoffen (D) bis (K) 0 bis 20 Gew.-%, bezogen auf das Gewicht der erfindungsgemäßen Zusammensetzung.

Die Gesamtmenge an gegebenenfalls eingesetzten weiteren Stoffen beträgt bevorzugt 0 bis 20 Gew.-%, bezogen auf das Gewicht der erfindungsgemäßen Zusammensetzung.

Zur Herstellung der erfindungsgemäßen Zusammensetzungen werden über die Komponenten (A), (B) und (C) sowie gegebenenfalls (D) bis (K) bevorzugt keine weiteren Bestandteile eingesetzt, wobei besonders bevorzugt zur Herstellung der erfindungsgemäßen Zusammensetzungen über die Komponenten (A), (B) und (C) sowie gegebenenfalls (E) keine weiteren Bestandteile eingesetzt werden.

Bei den einzelnen Bestandteilen der erfindungsgemäßen Zusammensetzung kann es sich jeweils um eine Art eines solchen Bestandteils wie auch um ein Gemisch aus mindestens zwei verschiedenen Arten derartiger Bestandteile handeln.

Die erfindungsgemäße Zusammensetzung ist bevorzugt im Temperaturbereich zwischen 20 und 100 °C und bei 1000 hPa flüssig.

Die Herstellung der erfindungsgemäßen Zusammensetzungen kann nach beliebiger und an sich bekannter Art und Weise erfolgen.

Ein weiterer Gegenstand der vorliegenden Erfindung ist ein Verfahren zur Herstellung der erfindungsgemäßen Organopolysiloxanzusammensetzungen durch Mischen der einzelnen Bestandteile.

Das Farbmittel (A) wird dabei bevorzugt in die Komponenten (B) oder (C) oder in die Mischung aus (B) und (C) eingemischt, wobei Farbmittel (A) in den Komponenten (B) und/oder (C) bevorzugt homogen verteilt werden.

Zum Vermischen können alle bisher bekannten Mischaggregate verwendet werden, wie z.B. Rührer, Dissolver, Kneter, Walzenstühle, Hochdruckhomogenisatoren, Ultraschallhomogenisatoren und Dispergiergeräte vom Typ "Ultra-Turrax".

Beim erfindungsgemäßen Vermischen können gegebenenfalls Lösungsmittel zugegeben werden, bevorzugt wird dabei auf die Verwendung von Lösungsmitteln verzichtet.

Das Vermischen erfolgt dabei bevorzugt bei Temperaturen von bevorzugt 0 bis 180 °C, besonders bevorzugt bei Temperaturen von 10 bis 100 °C.

Bei einer besonders bevorzugten Ausführungsform des erfindungsgemäßen Verfahrens wird eine Mischung der Komponenten (B) und (C) vorgelegt und Farbmittel (A) zu dieser hinzugegeben. Die Zugabe der Farbmittel kann bei Temperaturen um 20 °C jedoch auch bei erhöhten Temperaturen erfolgen, wobei sich die erfindungsgemäße Mischung durch über den Mischprozess eingetragene Mischenergie erwärmt. Eine Mischung bei erhöhter Temperatur von etwa 40 bis 100 ° ist hier besonders bevorzugt.

Das erfindungsgemäße Verfahren wird bevorzugt bei dem Druck der umgebenden Atmosphäre, also etwa 900 bis 1100 hPa, durchgeführt.

Das erfindungsgemäße Verfahren wird jedoch bevorzugt in einer Inertatmosphäre, wie z.B. Stickstoff oder Argon, unter weitestgehendem Ausschluss von Feuchtigkeit durchgeführt.

Die erfindungsgemäßen Zusammensetzungen können nun für alle Zwecke eingesetzt werden, für die auch bisher Farbmittel enthaltende Zusammensetzungen eingesetzt worden sind, bevorzugt als farbgebender Zusatz bei der Herstellung von Kunststoffen, Kunststoffprofilen oder Kunststofffasern.
Durch gezielte Variation von unpolaren Siloxanblöcken und organischen Blöcken können die Copolymere (C) vorteilhafterweise an verschiedenste Polymerwerkstoffe bezüglich der Verträglichkeit angepasst werden. Die Folge ist, dass aus einem bzw. nur wenigen Basiswerkstoffen Farb-Masterbatches für nahezu alle Polymerwerkstoffe erzeugt werden können. So kann auf Basis von Polysiloxan-Copolymeren (C) also Universal-Masterbatches für nahezu alle Polymerwerkstoffe, zumindest jedoch jeweils große Polymerwerkstoffgruppen, wie Polyolefine, Polyester, Styrol-basierte Polymere etc. erzeugt werden. Als vorteilhaft hat sich insbesondere herausgestellt, dass die erfindungsgemäßen Zusammensetzungen eine hohe Verträglichkeit mit einer Vielzahl von Polymerwerkstoffen bzw. Blends hiervon aufweisen. Hierzu zählen insbesondere Polyethylen, Polypropylen, Polyamid, Polyethylenterephthalat, Polybutylenterephthalat, thermoplastische Elastomere auf Basis von vernetztem Kautschuk, Ethylen-Vinylacetat, Polyhydroxybutyrat und/oder Copolymere oder Blends hiervon. Ebenso kann die erfindungsgemäße Zusammensetzung auch für Polystyrol, schlagzähmodifiziertes Polystyrol, Styrol-Acrylnitril-Copolymere, Acrylnitril-Butadien-Styrol-Copolymere, Polyvinylchlorid, Polymethylmethacrylat, Polycarbonat, Polyaryletherketon, Polyacrylnitril, Polyetherimid, Polyethylennaphthalat, Polyethersulfon, Polyimid, Polyamid, Polyketon, Polyoxymethylen, Polyphenylensulfid, Polyphenylensulfon, Polysulfon, StyrolButadien-Kautschuk, Acrylnitril-Butadien-Kautschuk, Naturkautschuk und deren Copolymere oder Blends eingesetzt werden.

Durch die hohe thermische Beständigkeit der Komponenten (A), (B) und (C) ist vorteilhafterweise der Einsatz der erfindungsgemäßen Mischung auch nicht durch hohe Verarbeitungsbedingungen der einzufärbenden Polymerwerkstoffe nennenswert eingeschränkt.

Insbesondere das verwendete Siloxan (B) gewährleistet hierbei, dass die erfindungsgemäße Zusammensetzung selbst bei hohen Verarbeitungstemperaturen von über 250 °C nur einen sehr geringen Dampfdruck aufweist und daher nicht in signifikanten Mengen ausgasen kann.

Eingefärbte Polymerwerkstoffe sind dabei insbesondere herstellbar durch Mischen mindestens eines Polymerwerkstoffs mit der erfindungsgemäßen Zusammensetzung in geschmolzenem Zustand und Abkühlen der Mischung.

Bevorzugt liegen die Polymerwerkstoffe in Form eines Formkörpers erhältlich durch einen formgebenden Prozess, ausgewählt aus der Gruppe bestehend aus Spritzgießen, Extrudieren, Formpressen, Walzenrotation, Rotationsformen, Lasersintern, Fused Deposition Modelling (FDM), Granulieren und/oder Gießen aber auch Spinnen vor.

Die erfindungsgemäße Zusammensetzung kann vorteilhafterweise zur Spinnfärbung von Textilfasern und technischen Fasern, insbesondere zur Spinnfärbung von teilorientierten Garnen, verwendet werden. Die erfindungsgemäße Zusammensetzung hat vor allem den Vorteil, dass die physikochemischen Eigenschaften der schmelzspinnfähigen Polymerisate soweit erhalten bleiben, dass die resultierende Polymerschmelze noch verspinnbar bleibt.

Überraschenderweise hat sich gezeigt, dass die erfindungsgemäße Zusammensetzung eine ausgezeichnete Homogenität, d.h. keinen Konzentrationsgradienten des Farbmittels (A) in der Zusammensetzung, aufweist.

Die erfindungsgemäßen Zusammensetzungen haben den Vorteil, dass sich die erfindungsgemäßen Zusammensetzungen als sehr tolerant gegenüber einer Vielzahl von Kunststoffen erweisen, mit denen in für die Kunststoffverarbeitung und -modifizierung üblichen Einsatzkonzentrationen eine gute Verträglichkeit besteht.

Die erfindungsgemäßen Zusammensetzungen haben den Vorteil, dass sie selbst bei höheren Verarbeitungstemperaturen von über 200 °C noch keinen signifikanten Dampfdruck haben und somit während des thermoplastischen Verarbeitungsprozesses bei den erforderlichen Schmelztemperaturen von über 150 °C nicht zu unerwünschten Emissionen führt.

Ein weiterer Vorteil der erfindungsgemäßen Zusammensetzungen in Verbindung mit anderen Kunststoffen ist das bessere Fließverhalten der Matrix in der Schmelze, wodurch z.B. bei Extrusions anwendungen eine enorme Durchsatzsteigerung erzielt werden kann. Dies liegt unter anderem darin begründet, dass die Komponenten B und/ oder C auch als interne oder externe Gleitmittel bei der Polymerherstellung wirken.

Das erfindungsgemäße Verfahren hat den Vorteil, dass es einfach in der Durchführung ist.

Das erfindungsgemäße Verfahren hat den Vorteil, dass sich sehr leicht auch höhere Konzentrationen an Farbmitteln leicht einarbeiten lassen. Auf Basis der siliconhaltigen Trägermaterialien ist es möglich, Pasten mit den Grundfarbtönen zu erzeugen. Diese Pasten können dann gegebenenfalls vor der Zudosierung bei der abschließenden Polymerverarbeitung zum Endfarbton gemischt werden. Ein weiterer wesentlicher Vorteil besteht darin, dass das Trägermaterial des Farb-Masterbatches im Vergleich zu thermoplastischen Trägermaterialien nur ein einziges Mal vor dem Endeinsatz thermisch nur sehr gering belastet wird. Dadurch verringert sich der Einfluss thermischer Abbaureaktionen auf die Matrix aber auch auf die verwendeten Pigmente.

Das erfindungsgemäße Verfahren hat weiterhin den Vorteil, dass die Verwendung des Siloxan-Organo-Copolymers (C) bei der Herstellung der erfindungsgemäßen Zusammensetzungen zu einer wesentlich besseren Dispergierung der Farbmittel (A) im verwendeten Siloxan (B) führt, wodurch geringere Verarbeitungsviskositäten bzw. höhere Pigmentbeladungen ermöglicht werden.

Die homogene Dispergierung von großen Konzentrationen an Farbmitteln (A) in diesen relativ niedrigviskosen Systeme ist überraschenderweise sehr gut handhabbar und mittels der in der Farben- und Lack-Industrie etablierten Techniken problemlos realisiert. Ein Vorteil der erfindungsgemäßen Zusammensetzung ist, dass die verwendeten Grundkomponenten (B) und (C) polymere Verbindungen sind, welche sich mit Molmassen von > 10 000 g/mol auszeichnen können.

Zugleich führt das verwendete Siliconorganocopolymer auch zu einer deutlich feineren Verteilung der siliconhaltigen Komponenten der erfindungsgemäßen Zusammensetzung bei der Zumischung dieser zu den einzufärbenden Polymerwerkstoffen. Dies kann dadurch erklärt werden, dass die Silicionorganocopolymere als Kompatibilisatoren für die verwendeten Siliconprodukte (B) im Polymerwerkstoff wirken.

Ein weiterer Vorteil der erfindungsgemäßen Zusammensetzung liegt darin begründet, dass sich diese mittels etablierter Techniken leicht auch in sehr geringen Dosierungen kontinuierlich zu den einzufärbenden Poymerwerkstoffen zudosieren lassen, womit v.a. während kontinuierlicher Verarbeitungsprozesse eine wesentlich gleichmäßigere Färbung erreichen lässt.

In den nachstehend beschriebenen Beispielen werden, sofern nicht anders angegeben, bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### PET (Polyethylenterephthalat):

Polyethylenterephthalat HC 100 (der Fa. SABIC, Riyadh, Saudi-Arabien)
**Siloxan 1:** trimethylsilyl-terminiertes Polydimethylsiloxan mit einer Viskosität von 1000 mPas (käuflich erhältlich unter der Bezeichnung "AK 1000" bei der Wacker Chemie AG, D-München);
**Pigment 1:** Farbruß Printex 60 (käuflich erhältlich unter der Bezeichnung "Printex 60 Pulver" bei der Orion Engineered Carbons GmbH, Frankfurt, Germany).

### Herstellung eines Polysiloxan-Polycaprolacton-Blockcopolymers (Copolymer 1):

800 g eines Bisaminopropyl-terminierten Polydimethylsiloxans mit einem Molekulargewicht Mn von 3150 g/mol wurde mit 800 g ε-Caprolacton (Fa. Perstorp, Malmö, Schweden) vermischt. Anschließend wurden 500 ppm Dibutylzinndilaurat hinzu gegeben und die Reaktionsmischung auf 70°C unter Rühren erwärmt und 1 Stunde bei dieser Temperatur gehalten. Daraufhin wurde auf 140°C erwärmt und 6 Stunden bei dieser Temperatur unter Rühren gehalten. Abschließend wurde im Hochvakuum (< 10 mbar) ca. 1 bis 2% flüchtige Bestandteile der Reaktionsmischung entfernt (Siloxan-Cyclen sowie ε-Caprolacton). Das entsprechend erhaltene Copolymer wurde anschließend abgekühlt und gemahlen.
Man erhielt eine OH-terminiertes Polyorganosiloxan-Polycaprolacton-Blockcopolymer mit einem Siloxangehalt von 50 Gew.-%, einem Schmelzpunkt von 52 °C bei 1000 hPa und einem mittleren Molekulargewicht Mn von 6320 g/mol.

### Beispiele 2 bis 9

Mit den in Tabelle 1 angegebenen Komponenten in den dort genannten Mengen wurden Zusammensetzungen hergestellt, indem man zuerst das Copolymer 1 und das Siloxan 1 bei einer Temperatur von 70 °C miteinander homogen vermischt hat und anschließend das Pigment 1 mittels eines Zentrifugalmischers ARE 310 (der Firma Thinky Coporation, Tokyo, Japan) bei einer Umdrehungszahl von 2000 U/min für eine Dauer von 2 x 8 Minuten eingemischt hat.

**Tabelle 1**

| Beispiel | Pigment 1 [g] | Siloxan 1 [g] | Copolymer 1 [g] |
|---|---|---|---|
| 2 | 27,5 | 54,4 | 18,1 |
| 3 | 27,5 | 58,0 | 14,5 |
| 4 | 27,5 | 59,7 | 12,8 |
| 5 | 30 | 52,5 | 17,5 |
| 6 | 30 | 56,0 | 14,0 |
| 7 | 33,3 | 50,0 | 16,7 |
| 8 | 33,3 | 53,4 | 13,3 |
| 9 | 33,3 | 54,9 | 11,8 |

Die so erhaltenen Zusammensetzungen der Beispiele 2 bis 9 wurden hinsichtlich ihres Viskositätsprofiles charakterisiert. Die Ergebnisse finden sich in Tabelle 2. Die Messungen wurden auf einem Rheometer MCR 301 der Fa. Anton Paar (Graz, Österreich) durchgeführt. Hierbei wurde mittel Kegel-Platte-System in Oszillation bei einer Frequenz von 1 Hz und einer Deformationsrate von 0.02 % der Betrag der komplexen Viskosität bestimmt.

**Tabelle 2:**

| **Beispiel** | **Viskosität 30 °C [Pas]** | **Viskosität 50 °C [Pas]** | **Viskosität 80 °C [Pas]** | **Viskosität 100 °C [Pas]** |
|---|---|---|---|---|
| 2 | 28 870 | 7 697 | 4 245 | 4 429 |
| 3 | 20 240 | 3 281 | 2 358 | 2 371 |
| 4 | 22 360 | 7 706 | 3 268 | 4 106 |
| 5 | 64 940 | 9 426 | 6 417 | 5 882 |
| 6 | 12 710 | 3 341 | 3 508 | 3 728 |
| 7 | 285 000 | 30 900 | 21 840 | 21 790 |
| 8 | 351 100 | 55 400 | 47 800 | 55 000 |
| 9 | 398 300 | 34 700 | 34 540 | 37 170 |

Für die so erhaltenen Zusammensetzungen der Beispiele 2 bis 9 wurden die Viskositäten (Visk.) bei 80 °C und verschiedenen Scherraten bestimmt. Die Ergebnisse finden sich in Tabelle 3. Die Messungen wurden auf einem Rheometer MCR 302 der Fa. Anton Paar (Graz, Österreich) durchgeführt. Hierbei wurde mittel Kegel-Platte-System bei verschiedenen Scherraten der Betrag der komplexen Viskosität bestimmt.

**Tabelle 3:**

| **Beispiel** | **Visk. [Pas] 0,1 1/s** | **Visk. [Pas] 1 1/s** | **Visk. [Pas] 10 1/s** | **Visk. [Pas] 100 1/s** |
|---|---|---|---|---|
| 2 | 127 000 | 10 200 | 864 | 84,9 |
| 3 | 114 000 | 8 770 | 762 | 76,1 |
| 4 | 198 000 | 16 100 | 1 400 | 134 |
| 5 | 150 000 | 11 500 | 981 | 83,2 |
| 6 | 176 000 | 14 000 | 1 210 | 116 |
| 7 | 163 000 | 13 500 | 1 160 | 104 |
| 8 | 175 000 | 13 300 | 1 150 | 101 |
| 9 | 290 000 | 20 100 | 1 770 | 148 |

Es zeigte sich, dass die Viskosität der Zusammensetzungen aus den Beispielen 2 bis 9 stark vom Gehalt des Pigmentes abhängt. Gleichzeitig nimmt bei konstantem Pigmentgehalt mit zunehmendem Gehalt an Copolymer 1 die Viskosität ab, was ebenfalls für eine bessere Dispergierung des Pigments in der Zusammensetzung spricht.

### Vergleichsbeispiel 1

Zu 2,0 kg PET-Pellets HC 100 wurden 0,5 kg Pigment 1 gegeben, miteinander homogen vermischt und über einen Trichter in einen gegenläufigen Zwei-Wellen-Kneter ZSK 25 der Fa. Collin (Ebersberg, DE) zudosiert. Bei einer Förderrate von 1,5 kg/h wurde der Kneter in der ersten Heizzone auf 150°C, in der zweiten Heizzone auf 220°C, in der dritten Heizzone auf 250°C, in der vierten Heizzone auf 245°C, in der fünften Heizzone auf 245°C und an der Düse auf 240°C temperiert. Die erhaltene Schmelze wurde in einem Wasserbad zu einem Strang abgekühlt und mittels eines Stranggranulators granuliert.

### Beispiele 10 bis 13

Zur Herstellung von eingefärbten Polymeren wurden die in Tabelle 4 angegebenen Edukte in den angegebenen Mengenverhältnissen miteinander homogen vermischt und über einen Trichter in einen gegenläufigen Zwei-Wellen-Kneter ZSK 25 der Fa. Collin (Ebersberg, DE) zudosiert. Bei einer Förderrate von 1,5 kg/h wurde der Kneter in der ersten Heizzone auf 150°C, in der zweiten Heizzone auf 220°C, in der dritten Heizzone auf 250°C, in der vierten Heizzone auf 245°C, in der fünften Heizzone auf 245°C und an der Düse auf 240°C temperiert. Die erhaltene Schmelze wurde in einem Wasserbad zu einem Strang abgekühlt und mittels eines Stranggranulators granuliert.

**Tabelle 4:**

| Beispiel | PET-Pellets | Farbmasterbatch | Farbmasterbatch Menge | Pigment Menge |
|---|---|---|---|---|
| 10 | 10,0 kg | | | |
| 11 | 9,85 kg | Beispiel 7 | 0,15 kg | 0,05 kg |
| 12 | 9,85 kg | Beispiel 9 | 0,15 kg | 0,05 kg |
| 13 | 9,75 kg | Vergleichsbeispiel 1 | 0,25 kg | 0,05 kg |

Die so hergestellten Mischungen wurden zu PET-Fasern versponnen und deren Eigenschaften bestimmt sowie das Spinnverhalten qualitativ beurteilt. Dabei wurden die in den Beispielen 10-13 erhaltenen Polymergranulate in einem Einschneckenextruder des Types Rheomex der Fa. Thermo Haake (Karlsruhe, DE) aufgeschmolzen und durch eine Düse zu Fasern versponnen. In Zone 1 betrug die Temperatur 285 °C, in Zone 2 290 °C, in Zone 3 285 °C, der Spinn-Kopf wurde auf 290 °C temperiert. Die Massetemperatur lag bei 290 °C. Im Spinnkopf waren 32 Spinndüsen angeordnet mit einem Durchmesser von 300 µm. Die entstehenden Fasern wurden mit einem Wickler der Fa. Oerlikon Barmag (Chemnitz, DE) mit einer Geschwindigkeit von 3000 m/min abgezogen.

Die Ergebnisse finden sich in Tabelle 5.

**Tabelle 5:**

| Mischung aus Beispiel | Schneckendruck [bar] | Druck Spinn-Kopf [bar] | Titer [dtex] | Dehnung [%] | Festigkeit [cN/tex] | Spinnverhalten |
|---|---|---|---|---|---|---|
| 10 | 12 | 50 | 100 | 116 | 28 | gut |
| 11 | 26 | 28 | 98 | 130 | 19 | gut |
| 12 | 12 | 26 | 100 | 134 | 19 | gut |
| 13 | 18 | 26 | 99 | 134 | 19 | befriedigend |

Die Spinnversuche zeigen, dass sich die Festigkeit der erhaltenen PET-Fasern durch die Anwesenheit des Ruß-Pigmentes leicht verschlechtert werden, die Dehnung jedoch leicht erhöht wird. Es zeigt sich ebenfalls, dass die Mischungen gemäß den Beispielen 11 und 12 ein besseres Spinnverhalten als die Mischung aus Beispiel 13 mit dem Farbmasterbatch gemäß Vergleichsbeispiel 1 aufweist, ohne jedoch schlechtere mechanische Eigenschaften zu haben.

## Patentansprüche

1. Farbmittel enthaltende Zusammensetzungen enthaltend
(A) mindestens ein Farbmittel,
(B) mindestens ein Organopolysiloxan enthaltend Einheiten der allgemeinen Formel
Rₐ(R¹O)_{b}SiO_{[4-(a+b)]/2} (I),
wobei
R gleich oder verschieden sein kann und einen einwertigen, SiC-gebundenen, gegebenenfalls substituierten Kohlenwasserstoffrest bedeutet, der durch Heteroatome unterbrochen sein kann,
R¹ gleich oder verschieden sein kann und Wasserstoffatom oder einen einwertigen, gegebenenfalls substituierten Kohlenwasserstoffrest darstellt, der durch Heteroatome unterbrochen sein kann,
a 0, 1, 2 oder 3 ist und
b 0, 1, 2 oder 3 ist,
mit der Maßgabe, dass die Summe a+b≤3 ist und in mehr als 80 % aller Einheiten der Formel (I) a gleich 2 ist, sowie
(C) mindestens ein Siloxan-Organo-Copolymer, wobei es sich bei den organischen Segmenten in den Copolymeren (C) um (Co)polymere des (Methyl)methacrylates, der Polyalkylenoxide oder um Polyester-Segmente handelt.

2. Zusammensetzungen gemäß Anspruch 1, **dadurch gekennzeichnet, dass** es sich bei Komponente (B) um bei 20 °C und 1000 hPa flüssige Organopolysiloxane handelt.

3. Zusammensetzungen gemäß Anspruch 1, **dadurch gekennzeichnet, dass** es sich bei den Farbmitteln (A) um anorganische oder organische Pigmente handelt.

4. Zusammensetzungen gemäß einem oder mehreren der Ansprüche 1 bis 3, **dadurch gekennzeichnet, dass** es sich bei den Farbmitteln (A) um Ruß oder Titandioxid handelt.

5. Zusammensetzungen gemäß einem oder mehreren der Ansprüche 1 bis 4, **dadurch gekennzeichnet, dass** Farbmittel (A) in Mengen von 0,5 bis 85 Gew.-%, bezogen auf das Gesamtgewicht der Komponenten (A), (B) und (C), eingesetzt wird.

6. Zusammensetzungen gemäß einem oder mehreren der Ansprüche 1 bis 5, **dadurch gekennzeichnet, dass** der Anteil des Siloxansegments im erfindungsgemäß eingesetzten Siloxan-Organo-Copolymer (C) mindestens 25 Gew.-% beträgt und der Anteil des Organosegmentes an der Komponente (C) maximal 75 Gew.-% beträgt.

7. Zusammensetzungen gemäß einem oder mehreren der Ansprüche 1 bis 6, **dadurch gekennzeichnet, dass** es sich bei Komponente (C) um ein Polysiloxan-Polycaprolacton Blockcopolymer enthaltend Siloxansegmente mit jeweils einem Molekulargewicht Mn von 1000 bis 10 000 g/mol handelt, wobei Molekulargewicht mittels der in der Beschreibung angegebenen Methode bestimmt wird.

8. Verfahren zur Herstellung der Organopolysiloxanzusammensetzungen gemäß einem oder mehreren der Ansprüche 1 bis 7 durch Mischen der einzelnen Bestandteile.

9. Verfahren gemäß Anspruch 8, **dadurch gekennzeichnet, dass** das Farbmittel (A) in die Komponenten (B) oder (C) oder in die Mischung aus (B) und (C) eingemischt wird.

## Claims

1. Colorant-comprising compositions comprising
(A) at least one colorant,
(B) at least one organopolysiloxane containing units of the general formula
Rₐ(R¹O)_{b}SiO_{[4-(a+b)]/2} (I),
where
R may be identical or different and is a monovalent, SiC-bonded, optionally substituted hydrocarbon radical which may be interrupted by heteroatoms,
R¹ may be identical or different and represents hydrogen atom or a monovalent, optionally substituted hydrocarbon radical which may be interrupted by heteroatoms,
a is 0, 1, 2 or 3, and
b is 0, 1, 2 or 3,
with the proviso that the sum a + b ≤ 3 and in more than 80% of all units of the formula (I) a is 2, and also (C) at least one siloxane-organo copolymer, the organic segments in the copolymers (C) comprising (co)polymers of (methyl) methacrylate, of polyalkylene oxides, or comprising polyester segments.

2. Compositions according to Claim 1, **characterized in that** component (B) comprises organopolysiloxanes which are liquid at 20°C and 1000 hPa.

3. Compositions according to Claim 1, **characterized in that** the colorants (A) comprise inorganic or organic pigments.

4. Compositions according to one or more of Claims 1 to 3, **characterized in that** the colorants (A) comprise carbon black or titanium dioxide.

5. Compositions according to one or more of Claims 1 to 4, **characterized in that** colorant (A) is used in amounts of 0.5 to 85 wt%, based on the total weight of the components (A), (B) and (C).

6. Compositions according to one or more of Claims 1 to 5, **characterized in that** the fraction of the siloxane segment in the inventively employed siloxane-organo copolymer (C) is at least 25 wt% and the fraction of the organo segment in component (C) is not more than 75 wt%.

7. Compositions according to one or more of Claims 1 to 6, **characterized in that** component (C) comprises a polysiloxane-polycaprolactone block copolymer containing siloxane segments having in each case a molecular weight Mn of 1000 to 10 000 g/mol, where molecular weight is determined by means of the method stated in the description.

8. Method for producing the organopolysiloxane compositions according to one or more of Claims 1 to 7 by mixing the individual constituents.

9. Method according to Claim 8, **characterized in that** the colorant (A) is mixed into the components (B) or (C) or into the mixture of (B) and (C).

## Revendications

1. Compositions contenant un colorant contenant :
(A) au moins un colorant,
(B) au moins un organopolysiloxane contenant des unités de la formule générale :
Rₐ(R¹O)_{b}SiO_{[4-(ab)]/2} (I)
dans laquelle
les R peuvent être identiques ou différents et signifient un radical hydrocarboné monovalent, relié à SiC, éventuellement substitué, qui peut être interrompu par des hétéroatomes,
les R¹ peuvent être identiques ou différents et représentent un atome d'hydrogène ou un radical hydrocarboné monovalent, éventuellement substitué, qui peut être interrompu par des hétéroatomes,
a signifie 0, 1, 2 ou 3, et
b signifie 0, 1, 2 ou 3,
à condition que la somme a+b ≤ 3 et que, dans plus de 80 % de toutes les unités de la formule (I), a signifie 2, ainsi que
(C) au moins un copolymère siloxane-organo, les segments organiques dans les copolymères (C) consistant en des (co)polymères de méthacrylate de méthyle, d'oxydes de polyalkylène ou en des segments polyester.

2. Compositions selon la revendication 1, **caractérisées en ce que** le composant (B) consiste en des organopolysiloxanes liquides à 20 °C et 1 000 hPa.

3. Compositions selon la revendication 1, **caractérisées en ce que** les colorants (A) consistent en des pigments inorganiques ou organiques.

4. Compositions selon une ou plusieurs des revendications 1 à 3, **caractérisées en ce que** les colorants (A) consistent en du noir de carbone ou du dioxyde de titane.

5. Compositions selon une ou plusieurs des revendications 1 à 4, **caractérisées en ce que** les colorants (A) sont utilisés en quantités de 0,5 à 85 % en poids, par rapport au poids total des composants (A), (B) et (C).

6. Compositions selon une ou plusieurs des revendications 1 à 5, **caractérisées en ce que** la proportion du segment siloxane dans le copolymère siloxane-organo (C) utilisé selon l'invention est d'au moins 25 % en poids, et la proportion du segment organo dans le composant (C) est d'au plus 75 % en poids.

7. Compositions selon une ou plusieurs des revendications 1 à 6, **caractérisées en ce que** le composant (C) consiste en un copolymère séquencé polysiloxane-polycaprolactone contenant des segments siloxane ayant chacun un poids moléculaire Mn de 1 000 à 10 000 g/mol, le poids moléculaire étant déterminé au moyen de la méthode indiquée dans la description.

8. Procédé de fabrication des compositions d'organopolysiloxane selon une ou plusieurs des revendications 1 à 7 par mélange des constituants individuels.

9. Procédé selon la revendication 8, **caractérisé en ce que** le colorant (A) est incorporé dans les composants (B) ou (C) ou dans le mélange de (B) et (C).
